# EUROPEAN PATENT SPECIFICATION

(11) **EP 3 222 690 B1**
(45) Date of publication and mention of the grant of the patent: **23.02.2022**
(21) Application number: 17161553.7
(22) Date of filing: 17.03.2017
(51) Int. Cl.: C09J 123/08, C09J 175/06, C09J 201/10, C08L 23/08

(54) **REACTIVE HOT MELT ADHESIVES IN THE FORM OF "PILLOWS"**
REAKTIVE SCHMELZKLEBSTOFFE IN DER FORM VON KISSEN
ADHÉSIFS RÉACTIFS THERMOFUSIBLES SOUS FORME DE COUSSINS

(30) Priority: 22.03.2016 IT UA20161888
(43) Date of publication of application: 27.09.2017
(73) Proprietor: DURANTE ADESIVI S.P.A., 33080 Frazione Ghirano (IT)
(72) Inventor: HIPPOLD, Theodor Hugo, 32108 Bad Salzuflen (DE)
(74) Representative: Rausa, Mario Alberto Manlio

(56) References cited:
- EP-A1- 0 469 564
- US-A1- 2006 093 764
- US-A1- 2013 309 427

## Description

The present invention relates to reactive hot melts manufactured in the form of solid small elements ("pillows") having an exterior protective layer.

The invention also relates to a process for manufacturing said reactive hot melts pillows with an exterior protective layer.

Hot melt adhesives, also known as "hot melts", "hot glues" or "thermofusible adhesives", are thermoplastic adhesives that are generally solid at room temperature and get melted when heated, becoming first plastic and then liquid.

When in the liquid state, hot melts are tacky and can be applied to the substrates to stick together; they then solidify in a few seconds upon cooling, without any changes in their chemical structure and forming a strong and resistant bond with good elastic properties.

Hot melts have 100% solids content and do not contain any solvents.

Hot melt adhesives provide several advantages over other adhesives which are set, e.g., via solvent elimination, such as the absence of solvents and/or other volatile organic compounds in their formulation, the quick adhesion without drying or chemical curing steps, the ability to adhere to both porous and non-porous materials, the flexibility at low temperatures, the long shelf life, their disposal without special precautions. Por these reasons, hot melts have a number of different industrial application, e.g. in the packaging, automotive, electronics, furniture and footwear fields.

Hot melt adhesives can be either reactive or non-reactive, according to whether a chemical reaction must occur in order for them to carry out their adhesive function, or not.

Non-reactive hot melts are, e.g., the pressure-sensitive adhesives (PSA); generally, these adhesives have a sticky surface so that they have to be protected in order to avoid contact (and consequent adhesion) to undesired substrates.

Examples of reactive hot melts, instead, are those containing isocyanate or silane groups, such as polyurethanes or silicones.

Isocyanate and silane groups are able to react with the water molecules coming from the humidity on the surfaces of the substrates to bond: the water molecules cross-link the isocyanate or silane groups, and a polymer with high molecular weight and excellent physical characteristics (high heat resistance, good cold flexibility and high hydrolysis stability) is formed.

However, isocyanate and silane groups can react as well with the water molecules coming from the humidity in the air: reactive hot melts can therefore cross-link merely upon exposure to air, thus becoming successively unusable as adhesives.

Reactive hot melts of this type have therefore to be protected against an early reaction with air humidity until their proper use as adhesives, in order to preserve their reactive properties and, consequently, their adhesive properties.

To this purpose, reactive hot melts are conveniently packaged in moisture-proof containers such as steel drums, tin cans or aluminum bags. Generally speaking, for applications requiring a high consumption of reactive hot melt, the hot melt is manufactured as a solid blend and packed in steel drums with a volume typically comprised between 20 and 200 liters, or in aluminum bags with a volume typically comprised between 2 and 20 liters, covered with heat sealable thermoplastic polymers, such as polyolefins, on both sides.

With suitable melting equipment like a drum melter the user can take the reactive hot melt out of the drum or the bag and pump it into melting tanks or directly to the application unit, where it is heated to the liquid state.

When small quantities of reactive hot melt are needed, instead, it is more convenient to use hot melt manufactured in the form of granules, which are generally packed, in order to be protected against air humidity, in tin cans or aluminum bags with typical capacity of 0,6-1,5 kg per unit.

In the light of the above, finding a way for providing reactive hot melts which do not need any additional protective packaging (tin cans, steel drums, aluminum bags) represents a relevant goal for both saving, convenience and ecology reasons.

The main aim of the present invention is therefore to provide a new way to protect reactive hot melts from humidity.

Within this aim, an object of the invention is to obtain a new way to protect reactive hot melts that allows to avoid further packaging.

Another object of the invention is to obtain reactive hot melts protected against air humidity that are convenient and handy when both small quantities and great quantities of hot melts are to be employed.

A further object of the invention is to provide a process for manufacturing reactive hot melts protected against air humidity that is easy to perform and does not generate high costs.

The above aim and objects, as well as other objects which will be better clarified in the following, are reached by a humidity-protected reactive hot melt adhesive as defined in claim 1.

The above aim and objects are also reached by a process for manufacturing the humidity-protected reactive hot melt adhesive as defined in claim 8.

Further objects, features and advantages of the present invention will better appear from the detailed description provided in the following.

As stated above, granules are a convenient size when small amounts of hot melts are needed for a certain application.

However, with the existing technology, hot melts granules can only be manufactured for reactive and non-reactive hot melts whose surface is not sticky, otherwise they would stick together ("cold flow") thus making it difficult to separate the granules from one another and pick up the desired amount thereof.

Hot melts with a sticky surface such as, e.g., PSA (Pressure-Sensitive Adhesive) hot melts are instead conveniently manufactured in the form of "pillows" wrapped in a protective plastic covering. Such "pillows" are small elements which typically have an approximately cylindrical shape and dimensions in the order of centimeters.

The protective plastic covering that wraps these pillows prevents the hot melt from sticking to any substrate it may come into contact with, thus ensuring that the hot melt maintains its adhesive efficacy. The protective plastic covering is made of a non-sticky, non-PSA hot melt.

Surprisingly, it has now been found that a protective covering can advantageously be employed to protect reactive hot melts which need to be sheltered from air humidity.

The present invention is therefore directed to humidity-protected reactive hot melt adhesive in the form of pillows, comprising a reactive hot melt adhesive in the form of pillow and a humidity protection exterior layer, wherein the exterior layer a mixture of one or more EVA copolymers and hydrophobic fumed silica.

In the context of the present invention, and as a skilled person knows, the term "pillow" refers to a small hot melt adhesive element having an approximately cylindrical shape and dimensions in the order of centimeters (typically 5-12 cm length, 0,6-3 cm diameter).

The one or more polymers that form the exterior layer of the pillows do not absorb air humidity and thus allow that the hot melt in the interior of the pillow does not come into contact with water molecules. For this reason, in the following the exterior layer will also be referred to as "protective (exterior) layer".

The total amount of the one or more polymers which form the protective exterior layer of the pillow can be comprised between 1 wt% and 10 wt% over the whole pillow (i.e. hot melt + exterior layer). Preferably, the total amount of such one or more polymers can be comprised between 1 wt% and 5 wt% over the whole pillow. More preferably, such total amount can be 2 wt% over the whole pillow.

Preferably, the exterior layer can consist essentially of a mixture of one or more EVA copolymers and hydrophobic fumed silica.

The exterior layer can consist essentially of a mixture of one or more EVA copolymers and hydrophobic fumed silica; in a particularly preferred embodiment, the exterior layer can consist of a mixture of one or more EVA copolymers and hydrophobic fumed silica. EVA copolymers are those that best allow fora failure-free operation of the melting units and of the systems for the application of the reactive hot melt adhesives.

Naturally, EVA copolymers *per se* are not able to represent a sufficient protective barrier to shelter reactive hot melts from air humidity, as they are actually permeable to water vapor, at a degree depending on the vinyl acetate (VA) content in the copolymer.

Surprisingly, it has been found that the addition of hydrophobic fumed silica in the EVA copolymers reduces the permeability of these copolymers to air humidity so that they effectively work as protective exterior layer for reactive hot melt adhesives.

Fumed silica is made up of SiO- tetrahedrons, joined together by siloxane bridges (Si-O-Si bonds). About every other Si atom on the surface of the fumed silica bears a hydroxyl group, thus forming a silanol group (R- Si-OH).

If these Si-OH groups are allowed to react with organosilicon compounds, hydrophobic characteristics are imparted to the fumed silica (i.e. it becomes hydrophobic fumed silica).

This hydrophobic treatment reduces or eliminates the moisture absorption properties of the silica.

Since the hydrophobic fumed silica has a large surface/weight ratio (50-400 m²/g), it is sufficient to add even small weight amounts thereof to the EVA copolymer to obtain a resulting copolymer with good moisture- protection properties.

In particular, the amount of hydrophobic fumed silica can be comprised between 1 wt% and 10 wt% of the mixture of one or more EVA copolymers and hydrophobic fumed silica.

Preferably, this amount can be comprised between 2 wt% and 10 wt% of the mixture of one or more EVA copolymers and hydrophobic fumed silica. More preferably, this amount can be comprised between 2 wt% and 5 wt% of the mixture of one or more EVA copolymers and hydrophobic fumed silica.

EVA copolymers added with hydrophobic fumed silica can be manufactured by using conventional production equipment for thermoplastic hot melts.

These kind of equipment is well known by those working in the field of thermoplastic polymers; as a skilled person knows, in the present case the mixer should be equipped with fast running dissolver or propeller blades, because of the low density and large surface/weight ratio of the hydrophobic fumed silica. EVA copolymers with hydrophobic fumed silica are normally obtained in the form of granules, just like EVA copolymers, by using conventional granulators.

Reactive hot melt adhesives that can be manufactured in the form of pillows having an exterior layer, as disclosed above are, e.g. the moisture curable isocyanate or silane terminated hot melts.

Examples of such hot melts are those made by a mixture of commercially available co-polyesters, like the Dynacoll^{®} 7000 series (produced by Evonik Industries AG, Germany) and an aromatic isocyanate, e.g. MDI, Methylene diphenyl diisocyanate, like Desmodur^{®} 44MS (produced by Covestro AG, Germany).

Reactive hot melt pillows with a protective exterior layer made of a mixture of one or more EVA copolymers and hydrophobic fumed silica, stored without any other packaging or protection at a temperature of 23°C and 60% humidity proved to have a shelf-life of about six months.

During the usage of the hot melt pillows, the adhesive has to melt, and the protective layer melts as well together with the adhesive itself: in view of the small percent amount of the polymer forming the protective layer over the amount of the adhesive, no changes in the chemical, physical and mechanical characteristics of the adhesive are observed.

A common application for the pillows according to the invention can be, for example, with regular edge banding machines used in the wood working industry.

Another aspect of the present invention is represented by a process for manufacturing humidity-protected reactive hot melt adhesive pillows, comprising a reactive hot melt adhesive in the form of pillows and a humidity protection exterior layer, with the exterior layer comprising a mixture of one or more EVA copolymers and hydrophobic fumed silica, by co-extruding the reactive hot melt adhesive and the mixture of one or more EVA copolymers and hydrophobic fumed silica.

As a person skilled in the field of adhesive polymers knows, other manufacturing methods may be used to prepare small elements (pillows) whose exterior layer is made of (a) different polymer(s); nonetheless, co- extrusion is the preferred method because of its ease, convenience and low-costs.

Co-extrusion processes and equipment are well-known and commonly used in the field of adhesives so that no detailed description thereof is needed in this context.

In a preferred embodiment, the pillows of the invention can be extruded under water. After the pillows manufactured by co-extrusion are cooled and dried, they can be stored without the need for any further specific moisture-proof packaging.

### EXAMPLES

### Example 1: preparation of one-component reactive PUR (polyurethane) hot melt, isocyanate terminated:

A mixture of:
- 50 parts by weight of an amorphous co-polyester with a hydroxyl number (mg KOH/g) between 31 and 39 and a glass transition temperature of 30°C·
- 30 parts by weight of an amorphous co-polyester with a hydroxyl number (mg KOH/g) between 18 and 24 and a glass transition temperature of -50°C
- 20 parts by weight of crystalline co-polyester with a hydroxyl number (mg KOH/g) between 27 and 34 and a glass transition temperature of -60°C
is heated up to 120°C, homogenized, evacuated to remove the water completely and reacted with an excess of aromatic isocyanate (Desmodur^{®} 44MS) in an equivalent ratio of 1:2,2.

The result of this reaction is an isocyanate terminated reactive PUR hot melt with an isocyanate content of 2,4% by weight.

This kind of adhesive is soft and squeezable at room temperature; it is not possible to manufacture this adhesive in the form of granules, as they would stick together.

This kind of reactive hot melt can be manufactured in pillows having a protective exterior layer according to the invention; it is possible to provide this reactive hot melt also in the size of small, easy to use portions.

### Example 2: preparation of one-component reactive polvolefin hot melt, silane terminated:

A mixture of:
- 40 parts by weight of an amorphous poly-alpha-olefine (APAO), like Vestoplast^{®} 508, produced by Evonik Industries;
- 50 parts by weight of a hydrogenated aliphatic hydrocarbon resin, like Regalite^{™} R 1125, produced by Eastman;
- 9,8 parts by weight of a Fischer-Tropsch wax, like Sasolwax^{®} HI, produced by Sasol;
- 0,2 parts by weight of a catalyst, like dibutyl tin dilaurate (DBTL) is mixed homogeneously in a ratio of 1:2 by weight with a mixture of:
- 90 parts by weight of a silane terminated amorphous poly-alpha- olefin (APAO), like Vestoplast^{®} 206, produced by Evonik Industries;
- 10 parts by weight of Fischer-Tropsch wax, like Sasolwax^{®} Hl, produced by Sasol
at 200°C. The result is a silane terminated reactive hot melt suitable for use for example in the wood working industry or in the automotive industry, wherein assembly of different substrates like plastics, wood or metal parts is involved.

This moisture curable reactive hot melt can be manufactured in pillows having a protective exterior layer according to the invention, which can be used in special melting units like small tank melters to feed application systems like glue guns for bead and spray applications.

In view of the above, it has been established that the present invention fully accomplishes the purpose and the scopes put forward hereinabove.

In fact, the pillows with a protective layer according to the present invention allow to store the reactive hot melt adhesives for a long period of time without the need for any further packaging to protect the hot melts from air humidity: thus, protective drums, cans or bags can be avoided.

In addition, pillows are a convenient size for the use of both large amounts and small amounts of reactive hot melts.

Also, the polymers forming the exterior layer of the pillows melt along with the reactive hot melt during the use thereof, without affecting the properties of the hotmelts.

Furthermore, pillows having a protective layer as described herein prevent the user from coming into contact with the adhesive when manipulating the pillow: the exterior layer is safe, clean, not sticky and easy to handle.

## Claims

1. A humidity-protected reactive hot melt adhesive pillow, comprising a reactive hot melt adhesive in the form of pillow and a humidity protection exterior layer, wherein said exterior layer comprises a mixture of one or more EVA (Ethylene-Vinyl Acetate) copolymers and hydrophobic fumed silica.

2. The humidity-protected reactive hot melt adhesive pillow according to claim 1 wherein the total amount of said mixture is comprised between 1 wt% and 10 wt% over the whole pillow.

3. The humidity protected reactive hot melt adhesive pillow according to claims 1 or 2 wherein the total amount of said mixture is comprised between 1 wt% and 5 wt% over the whole pillow.

4. The humidity protected reactive hot melt adhesive pillow according to any of claims 1-3 wherein said exterior layer consists of a mixture of one or m ore EVA copolymers and hydrophobic fumed silica.

5. The humidity protected reactive hot melt adhesive pillow according to any of the preceding claims wherein the amount of hydrophobic fumed silica is comprised between 1 wt% and 10 wt% with respect to the mixture of one or more EVA copolymers and hydrophobic fumed silica.

6. The humidity protected reactive hot melt adhesive pillow according to any of the preceding claims wherein the amount of hydrophobic fumed silica is comprised between 1 wt% and 5 wt% with respect to the mixture of one or more EVA copolymers and hydrophobic fumed silica.

7. The humidity protected reactive hot melt adhesive pillow according to any of the preceding claims wherein said reactive hot melt adhesive is selected from the group consisting of a isocyanate terminated hot melt and a silane terminated hot melt.

8. A process for manufacturing a humidity protected reactive hot melt adhesive pillow according to any of claims 1-7 by co-extruding the reactive hot melt adhesive and the mixture of one or more EVA copolymers and hydrophobic fumed silica.

9. The process according to claim 8 wherein the co-extrusion is under water.

## Patentansprüche

1. Ein feuchtigkeitsgeschütztes reaktives Schmelzklebstoffkissen, umfassend einen reaktiven Schmelzklebstoff in Form eines Kissens und eine Feuchtigkeitsschutz-Außenschicht, wobei besagte Außenschicht ein Gemisch aus einem oder mehreren EVA(Ethylen-Vinylacetat)-Copolymeren und hydrophobem pyrogenem Siliziumdioxid umfasst.

2. Das feuchtigkeitsgeschützte reaktive Schmelzklebstoffkissen gemäß Anspruch 1, wobei die Gesamtmenge des besagten Gemischs zwischen 1 Gew.-% und 10 Gew.-% über das gesamte Kissen liegt.

3. Das feuchtigkeitsgeschützte reaktive Schmelzklebstoffkissen gemäß Anspruch 1 oder Anspruch 2, wobei die Gesamtmenge des besagten Gemischs zwischen 1 Gew.-% und 5 Gew.-% über das gesamte Kissen liegt.

4. Das feuchtigkeitsgeschützte reaktive Schmelzklebstoffkissen gemäß einem der Ansprüche 1-3, wobei besagte Außenschicht aus einem Gemisch aus einem oder mehreren EVA-Copolymeren und hydrophobem pyrogenem Siliziumdioxid besteht.

5. Das feuchtigkeitsgeschützte reaktive Schmelzklebstoffkissen gemäß einem der vorstehenden Ansprüche, wobei die Menge des hydrophoben pyrogenen Siliziumdioxids zwischen 1 Gew.-% und 10 Gew.-%, bezogen auf das Gemisch aus einem oder mehreren EVA-Copolymeren und hydrophobem pyrogenem Siliziumdioxid, liegt.

6. Das feuchtigkeitsgeschützte reaktive Schmelzklebstoffkissen gemäß einem der vorstehenden Ansprüche, wobei die Menge des hydrophoben pyrogenen Siliziumdioxids zwischen 1 Gew.-% und 5 Gew.-%, bezogen auf das Gemisch aus einem oder mehreren EVA-Copolymeren und hydrophobem pyrogenen Siliziumdioxid, liegt.

7. Das feuchtigkeitsgeschützte reaktive Schmelzklebstoffkissen gemäß einem der vorstehenden Ansprüche, wobei besagter reaktive Schmelzklebstoff aus der aus einem Schmelzklebstoff mit Isocyanat-Endgruppen und einem Schmelzklebstoff mit Silan-Endgruppen bestehenden Gruppe ausgewählt ist.

8. Ein Verfahren zur Herstellung eines feuchtigkeitsgeschützten reaktiven Schmelzklebstoffkissens gemäß einem der Ansprüche 1-7 durch Koextrudieren des reaktiven Schmelzklebstoffs und des Gemischs aus einem oder mehreren EVA-Copolymeren und hydrophobem pyrogenem Siliziumdioxid.

9. Das Verfahren gemäß Anspruch 8, wobei die Koextrusion unter Wasser erfolgt.

## Revendications

1. Coussin d'adhésif thermofusible réactif protégé de l'humidité comprenant un adhésif thermofusible réactif dans la forme de coussin et une couche extérieure de protection de l'humidité, dans lequel ladite couche extérieure comprend un mélange d'un ou plusieurs copolymères d'EVA (éthylène-acétate de vinyle) et de silice pyrogénée hydrophobe.

2. Coussin d'adhésif thermofusible réactif protégé de l'humidité selon la revendication 1, dans lequel la quantité totale dudit mélange est de 1 % en masse à 10 % en masse sur le coussin entier.

3. Coussin d'adhésif thermofusible réactif protégé de l'humidité selon la revendication 1 ou 2, dans lequel la quantité totale dudit mélange est de 1 % en masse à 5 % en masse sur le coussin entier.

4. Coussin d'adhésif thermofusible réactif protégé de l'humidité selon l'une quelconque des revendications 1-3, dans lequel ladite couche extérieure consiste en un mélange d'un ou plusieurs copolymères d'EVA et de silice pyrogénée hydrophobe.

5. Coussin d'adhésif thermofusible réactif protégé de l'humidité selon l'une quelconque des revendications précédentes, dans lequel la quantité de silice pyrogénée hydrophobe est de 1 % en masse à 10 % en masse par rapport au mélange d'un ou plusieurs copolymères d'EVA et de silice pyrogénée hydrophobe.

6. Coussin d'adhésif thermofusible réactif protégé de l'humidité selon l'une quelconque des revendications précédentes, dans lequel la quantité de silice pyrogénée hydrophobe est de 1 % en masse à 5 % en masse par rapport au mélange d'un ou plusieurs copolymères d'EVA et de silice pyrogénée hydrophobe.

7. Coussin d'adhésif thermofusible réactif protégé de l'humidité selon l'une quelconque des revendications précédentes, dans lequel ledit adhésif thermofusible réactif est choisi dans le groupe consistant en un thermofusible à terminaison isocyanate et un thermofusible à terminaison silane.

8. Procédé pour la fabrication d'un coussin d'adhésif thermofusible réactif protégé de l'humidité selon l'une quelconque des revendications 1-7 par co-extrusion de l'adhésif thermofusible réactif et du mélange d'un ou plusieurs copolymères d'EVA et de silice pyrogénée hydrophobe.

9. Procédé selon la revendication 8, dans lequel la co-extrusion se fait sous l'eau.
